# EUROPÄISCHE PATENTANMELDUNG

(11) **EP 0 855 716 A1**
(43) Veröffentlichungstag der Anmeldung: **29.07.1998**
(21) Anmeldenummer: 97118315.7
(22) Anmeldetag: 22.10.1997
(51) Int. Cl.: G11B 33/04

(54) **CD-Kassette mit Halteeinrichtung**

(30) Priorität: 25.01.1997 DE 19702667
(71) Anmelder: Luckow, Hans-Jürgen, D-24558 Henstedt-Rhen (DE)
(72) Erfinder: Luckow, Hans-Jürgen, D-24558 Henstedt-Rhen (DE)
(74) Vertreter: Klickow, Hans-Henning

(57) **Zusammenfassung**

Die Kassette dient zur Aufbewahrung von Compact-Discs und weist eine Unterschale und eine verschwenkbar mit der Unterschale verbundene Oberschale auf. Mindestens eine Entriegelungstaste fixiert in einer Grundpositionierung die Oberschale relativ zur Unterschale. In einer Entriegelungsstellung gibt die Entriegelungstaste eine Verschwenkung der Oberschale relativ zur Unterschale frei. Nach einem Aufschwenken der Oberschale relativ zur Unterschale ist die Compact-Disc ohne wesentliche klemmende Beaufschlagung freigegeben. In einer aufgeschwenkten Positionierung der Oberschale relativ zur Unterschale ist die Compact-Disc im Bereich einer Mittelaussparung relativ zur Unterschale im wesentlichen hinterschneidungsfrei angeordnet. Es ist ebenfalls möglich, ohne Realisierung einer Entriegelungsfunktion lediglich eine Handhabungsunterstützung durch relativ zu einem Beipackelement überschneidungsfreie Anordnung eines Halteelementes vorzusehen.

## Beschreibung

Die Erfindung betrifft eine Kassette zur Aufbewahrung von Compact-Discs, die eine Unterschale und eine verschwenkbar mit der Unterschale verbundene Oberschale aufweist und bei der mindestens eine Entriegelungstaste in einer Grundpositionierung die Oberschale relativ zur Unterschale fixiert und in einer Entriegelungsstellung eine Verschwenkung der Oberschale relativ zur Unterschale freigibt und bei der nach einem Aufschwenken der Oberschale relativ zur Unterschale die Compact-Disc ohne wesentliche klemmende Beaufschlagung freigegeben ist.

Die Erfindung betrifft darüber hinaus eine Kassette zur Aufbewahrung von Compact-Discs, die eine Unterschale und eine verschwenkbar mit der Unterschale verbundene Oberschale aufweist und bei der mindestens eine Halterungseinrichtung in einer Grundpositionierung von der Unterschale gehaltert ist und durch eine Aussparung der Oberschale hindurchragt sowie in einer Öffnungsstellung nach einer Verschwenkung der Oberschale relativ zur Unterschale von der Oberschale freigegeben ist.

Ebenfalls betrifft die Erfindung eine Kassette zur Aufbewahrung von Compact-Discs, die eine Unterschale und eine verschwenkbar mit der Unterschale verbundene Oberschale aufweist und bei der mindestens eine Entriegelungstaste in einer Grundpositionierung die Compact-Disc relativ zur Unterschale fixiert sowie bei der in einer Entriegelungsstellung sowohl eine Verschwenkung der Oberschale relativ zur Unterschale als auch die Compact-Disc relativ zur Unterschale mindestens im Bereich der Entriegelungstaste freigegeben ist.

Derartige Kassetten zur Aufbewahrung von Compact-Discs sind in vielfältigen Ausführungsformen verfügbar. Es sind Aufnahmebehälter mit Halterungselementen bekannt, die je nach Anwendungsfall zur Fixierung von einer, zwei oder drei Compact-Discs ausgestattet werden können. Die Fixierung der Compact-Discs erfolgt überwiegend im Bereich einer Mittelaussparung der Compact-Discs. Bekannt ist es aber ebenfalls, eine seitliche Klemmung im Bereich eines Randes der Compact-Discs vorzunehmen. Bei einer Fixierung im Bereich der Mittelaussparung werden Klemmelemente verwendet, die entlang des Umfanges der Zentralausnehmung einer Auflagefläche angeordnet sind und die bei einem Aufschieben der Compact-Disc federnd in Richtung eines Mittelpunktes der Zentralausnehmung ausgelenkt werden und anschließend zur Fixierung der Compact Disc wieder zurückfedern .

Eine Kassette mit im Bereich einer Ecke angeordneter Entriegelungstaste wird in der EP-OS 0 671 743 beschrieben. Die Entriegelungstaste ist über ein relativ dünnes Verbindungsstück an einem Einlageteil für die Unterschale angeformt. Bei einer Druckbelastung der Entriegelungstaste wird diese relativ zum Einlegeteil verschwenkt und gibt sowohl die Oberschale der Kassette als auch einen Rand der Compact-Disc frei. Bei gedrückter Entriegelungstaste kann somit der Deckel der Kassette geöffnet und die Compact-Disc entnommen werden. Im Bereich einer Mittelaussparung der Compact-Disc ist ein Innenrandbereich unterhalb einer den Rand überkragenden Rasteinrichtung geführt. Hierdurch erfolgt in einer Verriegelungspositionierung eine Sicherung der Compact-Disc gegenüber von quer zur Auflagefläche wirkenden Kräften.

Aus der WO 93/12 993 ist eine weitere Kassette mit einer Entriegelungstaste beschrieben. Die Entriegelungstaste ist ebenfalls in einem Eckbereich angeordnet. Bei dieser Ausführungsform dient die Entriegelungstaste jedoch ausschließlich zur Entriegelung und Verriegelung von Gehäuseunterschale und Gehäuseoberschale. Ein Kontakt mit der Compact-Disc ist nicht vorgesehen.

In der WO 93/01 598 wird eine Kassette zur Aufbewahrung von Compact-Discs beschrieben, bei der im Bereich eines Zentralhalteelementes, das zum Eingriff in die Mittelaussparung der Compact-Disc vorgesehen ist, ein Entriegelungsknopf angeordnet ist. Der Entriegelungknopf ist federnd gelagert und führt bei einer Druckbelastung zu einem Verschwenken von Rastelementen, die den Innenrand der Compact-Disc in einer Verriegelungsstellung überkragen. Nach einem Verschwenken wird der Innenrand der Compact-Disc freigegeben und die Compact-Disc kann entnommen werden. Nach einem Loslassen des Druckknopfes kehrt dieser durch die Federeinwirkung in die Ausgangsposition zurück und positioniert die Rastelemente wieder in der Verriegelungsstellung. Bei einem Einsetzen der Compact-Disc wird durch Einführschrägen automatisch eine Ausweichbewegung der Rastelemente durchgeführt, so daß diese ohne Betätigung des Druckknopfes die Compact-Disc fixieren können.

Die bekannten Vorrichtungen mit Entriegelungsvorrichtung können noch nicht alle Anforderungen erfüllen, die sowohl hinsichtlich einer preiswerten Fertigung, einer hohen Gebrauchssicherheit, einer einfachen Handhabung sowie eines großen Gestaltungsspielraumes bei späteren Anwendungen gestellt werden.

Aufgabe der vorliegenden Erfindung ist es daher, eine Kassette der einleitend genannten Art derart zu konstruieren, daß die Handhabung verbessert wird.

Diese Aufgabe wird erfindungsgemäß dadurch gelöst, daß die Compact-Disc in einer aufgeschwenkten Positionierung der Oberschale relativ zur Unterschale im Bereich einer Mittelaussparung der Compact-Disc relativ zur Unterschale im wesentlichen hinterschneidungsfrei angeordnet ist.

Weitere Aufgabe der vorliegenden Erfindung ist es, eine vereinfachte Handhabung bei einem einfachen Aufbau der Kassette zu ermöglichen.

Diese Aufgabe wird erfindungsgemäß dadurch gelöst, daß die Halterungseinrichtung ausgehend von einem der Schwenkeinrichtung abgewandten Rand der Unterschale in Richtung auf die Schwenkeinrichtung eine Breite aufweist, die maximal gleich einem Abstand eines von der Oberschale gehalterten Beipackelementes zu dem der Schwenkeinrichtung abgewandten Rand der Unterschale ausgebildet ist.

Ebenfalls besteht eine Aufgabe der vorliegenden Erfindung darin, eine vereinfachte Handhabung sowie eine günstige Einleitung von Arretierungskräften in die Unterschale zu unterstützen.

Diese Aufgabe wird erfindungsgemäß dadurch gelöst, daß die Compact-Disc in einer aufgeschwenkten Positionierung der Oberschale relativ zur Unterschale im Bereich einer Mittelaussparung der Compact-Disc relativ zur Unterschale im wesentlichen hinterschneidungsfrei angeordnet ist und daß die Entriegelungstaste ausschließlich eine Arretierung der Compact-Disc relativ zur Unterschale ohne arretierende Beaufschlagungg der Oberschale vornimmt.

Durch die im wesentlichen hinterschneidungsfreie Anordnung der Mittelaussparung der Compact-Disc innerhalb der Kassette wird die Entnahme der Compact-Disc aus der Kassette erleichtert, da lediglich geringe Kräfte von einem Benutzer aufzubringen sind.

Zur Ermöglichung einer standardmäßig bei automatischen Bestückungen zum Einsatz kommenden Bauteilegeometrie wird vorgeschlagen, daß die Oberschale eine Aufnahme zur Halterung eines im wesentlichen rechteckförmigen Beipackelementes aufweist.

Eine weitere konstruktive Vereinfachung kann dadurch erfolgen, daß die Compact-Disc innerhalb der Unterschale durch Halterungsvorsprünge der Oberschale fixierbar ist.

Zur weiteren Verbesserung der Funktionssicherheit wird vorgeschlagen, daß mindestens zwei der Halterungsvorsprünge mit unterschiedlichen Abständen zu einem Schwenkgelenk angeordnet sind, das die Oberschale mit der Unterschale verbindet.

Eine andere konstruktive Realisierungsmöglichkeit besteht darin, daß die Entriegelungstaste in einem seitlichen Bereich der Kassette angeordnet ist.

Eine zusätzliche Verbesserung bezüglich einer Fixierung der Compact-Disc innerhalb der Kassette kann dadurch erreicht werden, daß die Entriegelungstaste in einer Verriegelungstellung sowohl die Oberschale relativ zur Unterschale als auch die Compact-Disc innerhalb der Kassette fixiert.

Alternativ oder ergänzend zu einer Fixierung der Compact-Disc im Bereich ihrer Mittelaussparung kann vorgesehen werden, daß innerhalb der Kassette entlang eines Außenrandes der Compact-Disc mindestens ein Halteelement angeordnet ist.

Eine verteilte Krafteinleitung bei vermindertem Materialeinsatz kann dadurch erfolgen, daß in mindestens einem Eckbereich der Kassette mindestens zwei Halteelemente angeordnet sind.

Eine Fixierung der Compact-Disc senkrecht zur Auflagefläche kann dadurch unterstützt werden, daß das Halteelement einen die Compact-Disc bereichsweise überkragenden Begrenzungssteg aufweist.

Zur Erleichterung eines Einsetzens der Compact-Disc in die Kassette wird vorgeschlagen, daß der Begrenzungssteg als Rastnase ausgebildet ist, die eine Einführanschrägung aufweist.

Eine andere Variante zur örtlichen Lokalisierung der Entriegelungsfunktion besteht darin, daß die Entriegelungstaste im Bereich eines Randsteges der Kassette angeordnet ist.

Ebenfalls ist es zur Gewährleistung einer guten Zugänglichkeit der einzelnen Funktionskomponenten möglich, daß die Entriegelungstaste dem Schwenkgelenk gegenüberliegend angeordnet ist.

Eine weitere Möglichkeit zur Unterstützung einer Fixierung der Compact-Disc innerhalb der Kassette besteht darin, daß die Kassette ein zylinderartig ausgebildetes Zentralelement aufweist, das in eine Mittelaussparung der Compact-Disc einführbar ist.

Die Einnahme einer vorgesehenen Positionierung der Compact-Disc innerhalb der Kassette kann dadurch unterstützt werden, daß das Zentralelement eine Justieranschrägung zur Positionierung der Compact-Disc innerhalb der Kassette aufweist.

Eine weitere Einsparung von Material kann dadurch erfolgen, daß das Zentralelement aus Stegen ausgebildet ist, die sich relativ zu einer Bezugsfläche erheben und von Abständen getrennt sind.

In der Zeichnung sind Ausführungsbeispiele der Erfindung schematisch dargestellt. Es zeigen:
- Fig. 1: eine teilweise Querschnittdarstellung durch eine im Bereich ihrer Mittelaussparung gehalterte Compact-Disc,
- Fig. 2: eine Darstellung entsprechend Fig. 1 bei einer Halterung der Compact-Disc durch ein lamellenartig aufgebautes zylindrisches Element,
- Fig. 3: eine Draufsicht auf eine geöffnete Kassette, bei der entlang eines Außenrandes der Compact-Disc Halteelemente angeordnet sind und bei der im Bereich einer Ecke eine Entriegelungstaste vorgesehen ist,
- Fig. 4: eine vergrößerte teilweise Darstellung im Bereich eines gegen das seitliche Halteelemente geführten Außenrandes der Compact-Disc,
- Fig. 5: eine Darstellung entsprechend Fig. 4 mit den Außenrand überkragendem Bereich des Halteelementes,
- Fig. 6: eine weitere Darstellung entsprechend Fig. 4 mit einem den Außenrand der Compact-Disc rastnasenartig überkragenden Halteelement, das eine Einführanschrägung aufweist,
- Fig. 7: eine Darstellung entsprechend Fig. 3 mit segmentierten Halteelementen,
- Fig. 8: eine Darstellung entsprechend Fig. 3 mit modifizierter Unterschale und im Bereich eines Randelementes mittig angeordneter Entriegelungstaste,
- Fig. 9: eine teilweise Darstellung einer Kassette mit seitlich angeordneter Entriegelungstaste,
- Fig. 10: eine teilweise Darstellung eines Querschnittes gemäß Schnittlinie X-X in Fig. 9,
- Fig. 11: eine Innenansicht der Oberschale mit seitlich angeordneten Andruckelementen zur Beaufschlagung eines Randbereiches der Compact-Disc,
- Fig. 12: eine teilweise Darstellung eines stark schematisierten Querschnittes gemäß Schnittlinie XII-XII in Fig. 8,
- Fig. 13: eine Darstellung vergleichbar zu Fig. 3 mit dem Schwenkgelenk gegenüberliegender Entriegelungstaste,
- Fig. 14: eine teilweise Darstellung des rechten Bereiches der Vorrichtung gemäß Fig. 13 in einer abgewandelten Variante, bei der die Entriegelungstaste derart angeordnet ist, daß keine Überschneidung mit einem standardmäßig dimensionierten Beipackelement vorliegt,
- Fig. 15: eine weitere Variante zur Ausführungsform gemäß Fig. 14, bei der jedoch von einem tastenartigen Halteelement keine Beaufschlagung der Compact-Disc erfolgt
**und**
- Fig. 16: eine teilweise Darstellung einer Ausführungsform, bei der ein durch die Oberschale hindurchragendes Haltelement in einem Eckbereich der Unterschale angeordnet ist.

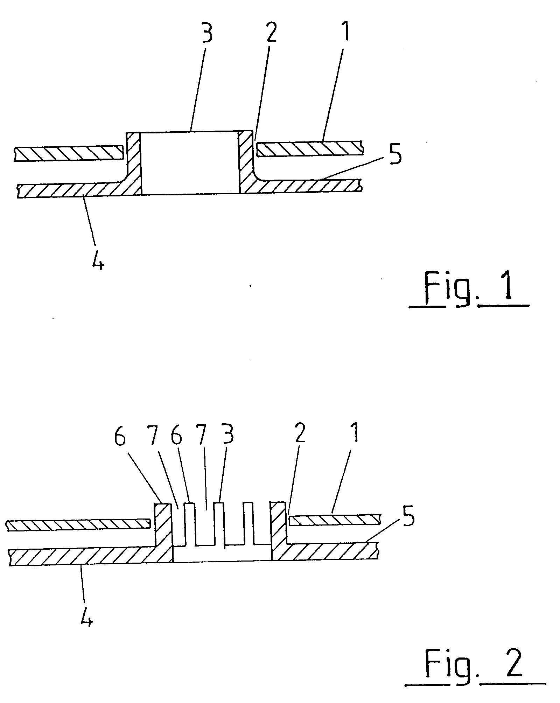

Fig. 1 zeigt in einer Querschnittdarstellung die Halterung einer Compact-Disc (1) im Bereich einer Mittelaussparung (2) durch ein Zentralelement (3). Das Zentralelement (3) wird von einem plattenartigen Einsatzteil (4) gehaltert und erhebt sich etwa zylindrisch über eine vom Einsatzteil (4) aufgespannte Bezugsfläche (5).

Das Zentralelement (3) kann als Zentrierhilfe ausgebildet sein, die lediglich in radialer Richtung eine Positionierung der Compact-Disc (1) relativ zum Einsatzteil (4) festlegt und gegebenenfalls einen Randabstand zur Compact-Disc (1) aufweist. Es ist aber auch möglich, das Zentralelement (3) als Klemmelement auszubilden, das Haltekräfte auf die Compact-Disc (1) überträgt.

Gemäß der Ausführungsform in Fig. 2 ist das Zentralelement (3) aus Stegen (6) ausgebildet, zwischen denen sich Abstände (7) erstrecken. Die Stege (6) erheben sich über das Einsatzteil (4) und definieren eine im wesentlichen zylindrische Grundkontur.

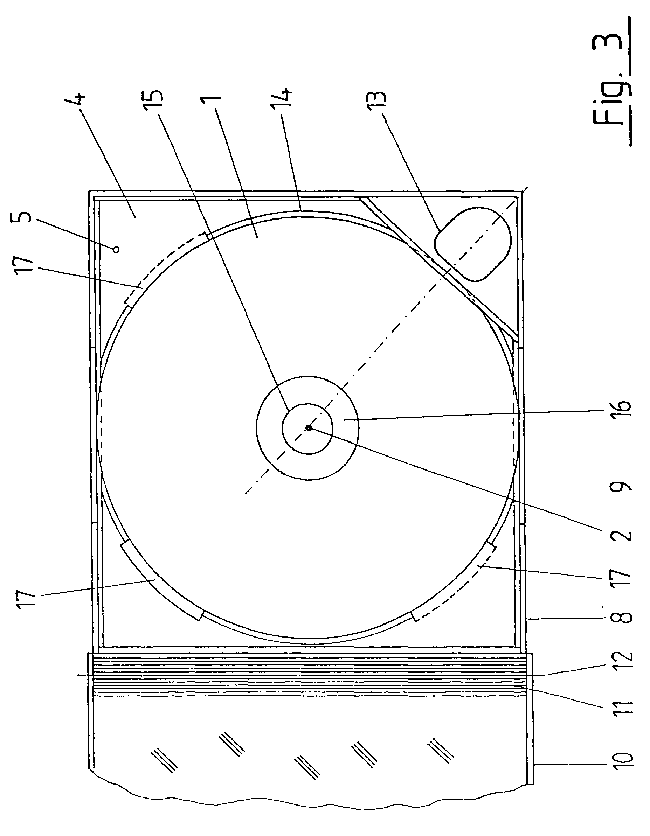

Aus Fig. 3 ist erkennbar, daß die Compact-Disc (1) von einer Kassette (8) aufgenommen ist, die eine Unterschale (9) und eine Oberschale (10) aufweist. In die Unterschale (9) ist das Einsatzteil (4) eingelegt.

Die Unterschale (9) weist einen sich über die Bezugsfläche (5) erhebenden Randsteg (11) auf, in dessen Bereich ein Schwenkgelenk (12) zur Ermöglichung von Drehbewegungen zwischen der Oberschale (10) und der Unterschale (9) angeordnet ist. Das Schwenkgelenk (12) kann beispielsweise aus Zapfen und korrespondierenden Bohrungen ausgebildet sein.

In einem Eckbereich der Unterschale (9) ist eine Entriegelungstaste (13) angeordnet, die mindestens die Funktion einer lösbaren Verriegelung zwischen der Unterschale (9) und der Oberschale (10) erfüllt. Zusätzlich ist insbesondere auch daran gedacht, gleichzeitig durch die Entriegelungstaste (13) eine Beaufschlagung im Bereich eines Außenrandes (14) der Compact-Disc (1) zu realisieren.

Bei der in Fig. 3 dargestellten Ausführungsform ist daran gedacht, das Einsatzteil (4) im Bereich der Mittelaussparung (2) der Compact-Disc (1) im wesentlichen materialfrei auszubilden. Es ist lediglich in einer Umgebung eines Innenrandes (15) der Compact-Disc (1) eine Stützkonsole (16) vorgesehen, auf der die Compact-Disc (1) in einem Bereich aufliegt, der nicht zur Abspeicherung von Informationen vorgesehen ist. Es ist aber ebenfalls denkbar, ein Zentralelement (3) zu verwenden, das beispielsweise keine Klemmung der Compact-Disc (1) vornimmt, sondern lediglich eine Zentrierfunktion ausübt.

Zur Gewährleistung einer ausreichenden Fixierung der Compact-Disc (1) innerhalb der Kassette (8) ist entlang des Außenrandes (14) mindestens ein Halteelement (17) angeordnet, das am Einsatzteil (4) angeformt sein kann. Gemäß der Ausführungsform in Fig. 3 ist das Halteelement (17) in einem der Entriegelungstaste (13) gegenüberliegenden Eckbereich der Kassette (8) angeordnet. Ebenfalls ist es möglich, gestrichelt dargestellte zusätzliche Halteelemente (17) zu verwenden, die ebenfalls vorzugsweise in Eckbereichen der Kassette (8) angeordnet werden.

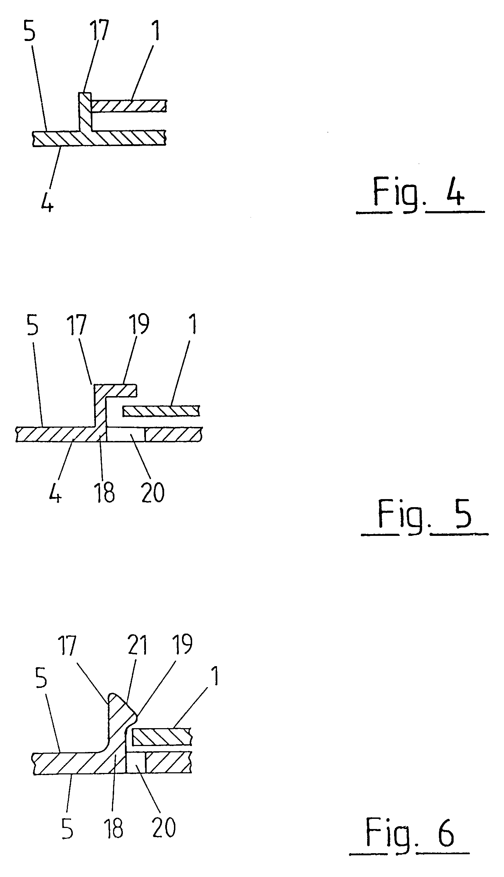

Fig. 4 zeigt in einer Querschnittdarstellung eine Ausbildung des Halteelementes (17) als Anlagesteg, der im wesentlichen bezüglich der Mittelaussparung (2) in radialer Richtung eine Positionierung der Compact-Disc (1) vorgibt.

Gemäß Fig. 5 ist vorgesehen, das Halteelemente (17) aus einem Vertikalsteg (18) und einem Begrenzungssteg (19) auszubilden, wobei sich der Vertikalsteg (18) im wesentlichen senkrecht über die Bezugsfläche (5) erhebt und der Begrenzungssteg (19) im wesentlichen parallel zur Bezugsfläche (5) verläuft.

Zur Erleichterung einer Fertigung im Spritzgußverfahren ist insbesondere daran gedacht, unterhalb des Begrenzungssteges (19) innerhalb des Einsatzteiles (4) eine Ausnehmung (20) anzuordnen, um eine einfache Entformung zu unterstützen.

Eine weitere Variante zeigt Fig. 6. Der Begrenzungssteg (19) ist hier als Rastnase geformt, der zusätzlich im Bereich seiner der Ausnehmung (20) abgewandten Ausdehnung mit einer Einführanschrägung (21) versehen ist.

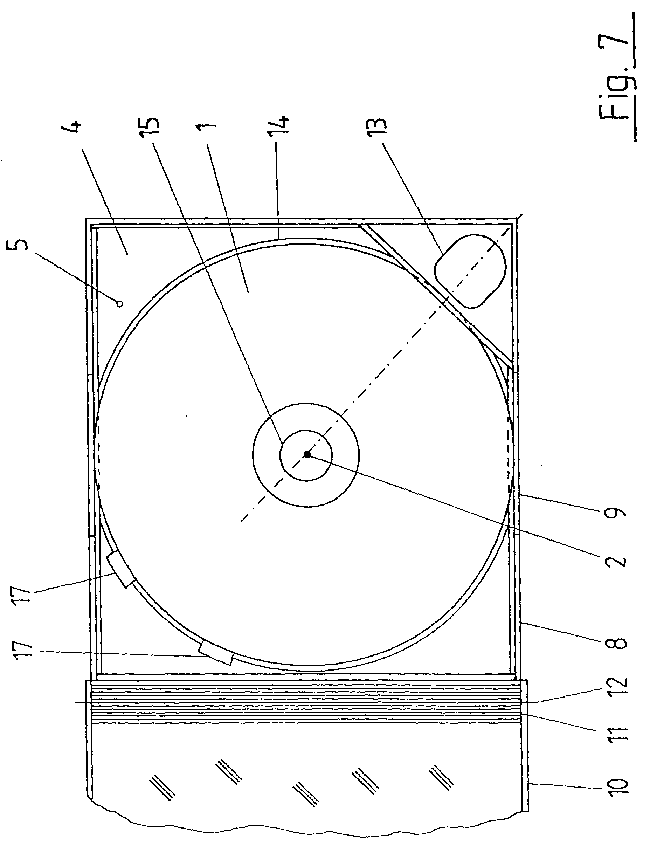

Bei der Ausführungsvariante gemäß Fig. 7 ist eine Anordnung der Entriegelungstaste (13) dargestellt, die im wesentlichen der Darstellung in Fig. 3 entspricht. Das Halteelement (17) ist jedoch innerhalb eines der Eckbereiche der Kassette (8) segmentiert. Bei der in der Zeichnung dargestellten Ausführungsform sind zwei Teilsegmente des Halteelementes (14) vorgesehen. Es ist allerdings auch möglich, eine stärkere Segmentierung vorzusehen, beziehungsweise auch im Bereich anderer Ecken der Kassette (8) derartige Segmente des Halteelementes (17) anzuordnen.

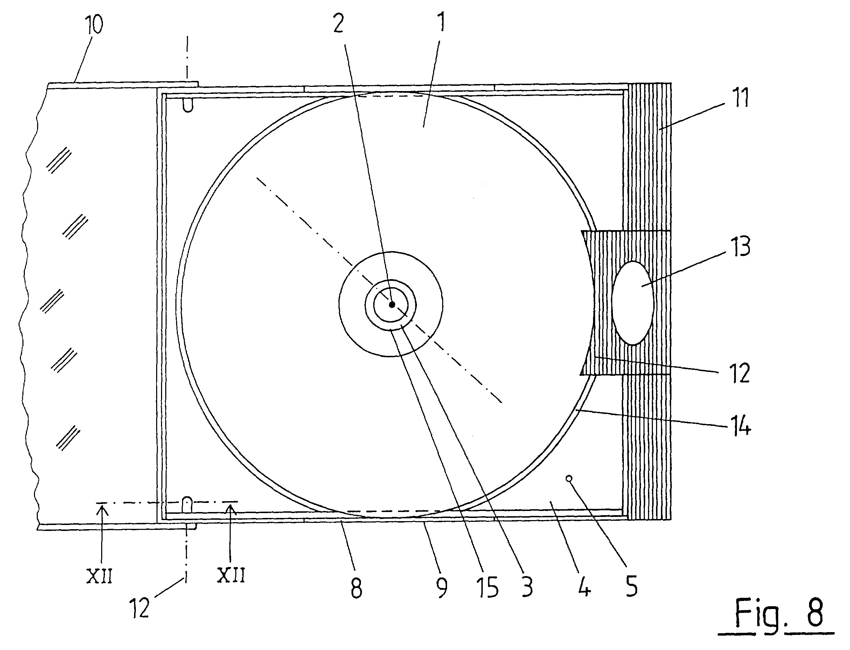

Bei der Ausführungsform gemäß Fig. 8 ist der Randsteg (11) an die dem Schwenkgelenk (12) gegenüberliegende Seite der Kassette (8) verlegt worden. Ebenfalls ist die Entriegelungstaste (13) in einem mittleren Bereich des Randsteges (11) plaziert. Grundsätzlich ist es ebenfalls denkbar, eine von einer symmetrischen Anordnung abweichende seitlich versetzte Anordnung der Entriegelungstaste (13) im Bereich des Randsteges (11) vorzusehen.

Die Ausführungsform gemäß Fig. 8 ermöglicht es insbesondere, einen Halteflansch (22) der Entriegelungstaste (13) relativ zur Bezugsfläche (5) auf einem abgesenkten Niveau gegenüber demjenigen Bereich der Entriegelungstaste (13) anzuordnen, der sich über die Breite des Randsteges (11) erstreckt. Hierdurch ist es möglich, den Halteflansch (22) unterhalb eines Niveaus anzuordnen, das von einer unteren Begrenzung eines Beipackelementes aufgespannt ist, das im Bereich der Oberschale (10) fixiert ist und das sich in einem geschlossenen Zustand der Kassette (8) oberhalb der Compact-Disc (1) erstreckt. Es können hierdurch weiterhin standardisierte Beipackelemente mit näherungsweise quadratischer Außenbegrenzung verwendet werden.

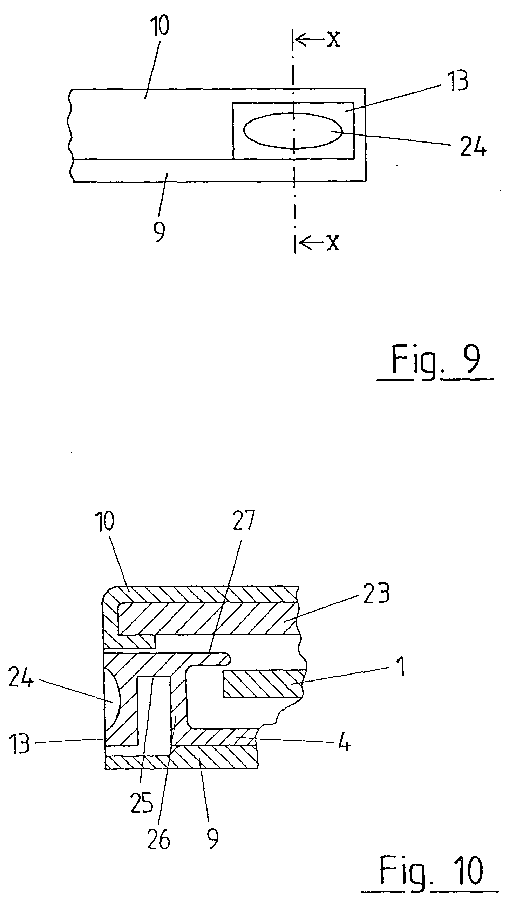

Fig. 9 zeigt eine seitliche Anordnung der Entriegelungstaste (13). Auch bei einer derartigen Anordnung ist es möglich, die Entriegelungstaste (13) relativ zu dem von der Oberschale (10) gehalterten Beipackelement (23) derart niedrig anzuordnen, daß keine Änderungen der Geometrie des Beipackelementes (23) erforderlich sind und daß das Beipackelement (23) mit der üblichen quadratischen oder rechteckförmigen Außenkontur verwendet werden kann.

Fig. 10 zeigt in einer Querschnittdarstellung einen möglichen Aufbau der Entriegelungsfunktion. Es ist erkennbar, daß die Entriegelungstaste (13) mit einer Bedienmulde (24) versehen ist, die eine Fingerbetätigung unterstützt. Die Entriegelungstaste (13) ist über einen Horizontalsteg (25) und einen Vertikalsteg (26) mit dem Einsatzteil (4) verbunden, mit dem die Entriegelungstaste (13) vorzugsweise ein einteiliges Bauelement ausbildet. Mit einem Halteelement (27) überkragt die Entriegelungstaste (13) in einer Grundposition die Compact-Disc (1). Nach einer Druckbelastung der Entriegelungstaste (13) schwenkt das Halteelement (27) derart beiseite, daß die Compact-Disc (1) freigegeben wird. Ebenfalls ist es möglich, alternativ oder ergänzend zu einer Freigabe der Compact-Disc (1) auch bei dieser Ausführungsform eine Verriegelung der Oberschale (10) relativ zur Unterschale (9) vorzunehmen.

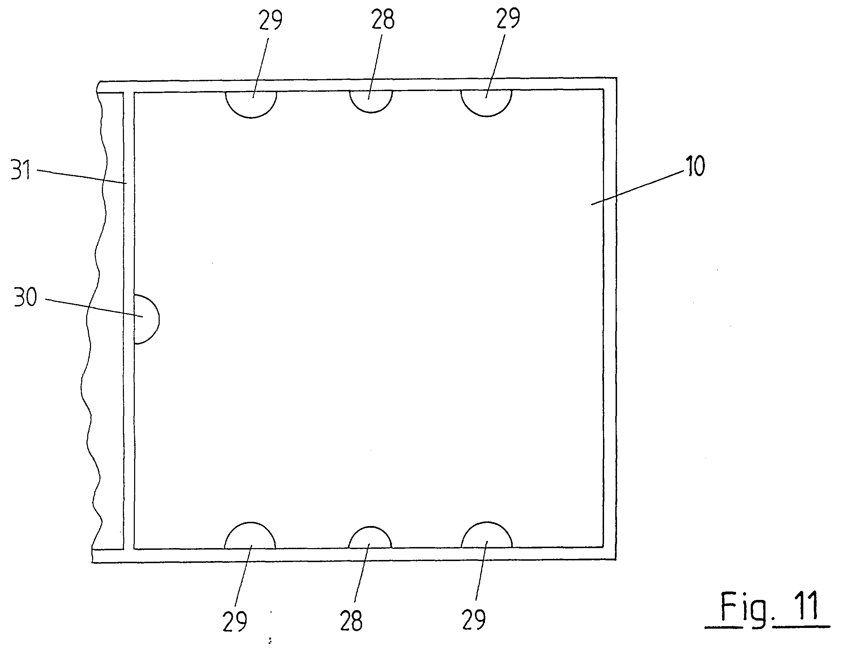

Fig. 11 zeigt eine offene Oberschale (10). Es ist erkennbar, daß die Oberschale (10) Halterungsvorsprünge (28,29,30) aufweist, die dazu dienen, das Beipackelement (23) im Bereich der Oberschale (10) zu fixieren. Die Dimensionierung der Halterungsvorsprünge (28,29,30) erfolgt dabei derart, daß sichergestellt ist, daß die Halterungsvorsprünge (28,29,30) nur in denjenigen Bereichen auf der Compact-Disc aufliegen, auf denen keine Informationen gespeichert sind. Es ist deshalb zweckmäßig, die mittig angeordneten Halterungsvorsprünge (28) nicht soweit vorstehen zu lassen, wie die weiter den Ecken der Kassette (1) zugewandten Halterungsvorsprünge (29).

Ebenfalls ist daran gedacht, im Bereich eines Quersteges (31) der Oberschale (10) den Halterungsvorsprung (30) anzuordnen, um bei einer zum Öffnen der Kassette (1) durchgeführten Schwenkbewegung der Oberschale (10) ein zeitlich aufeinander folgendes Abheben der unterschiedlichen Halterungsvorsprünge (28,29,30) von der Compact-Disc (1) hervorzurufen. Hierdurch wird ein sicheres Abheben von der Compact-Disc (1) unterstützt, da durch Haftungen oder Unterdruckeinflüsse mit einem Anheben der Compact-Disc (1) gerechnet werden muß.

Durch die relativ zum Schwenkgelenk (12) mit unterschiedlichen Abständen versehene Anordnung der Halterungsvorsprünge (28,29,30) wird erreicht, daß die mit einem größeren Abstand zum Schwenkgelenk (12) versehenen Halterungsvorsprünge (28,29,30) bereits von der Compact-Disc (1) abheben, wenn die mit einem geringeren Abstand zum Schwenkgelenk (12) versehenen Halterungsvorsprünge (28,29,30) noch ihre Klemmfunktion durchführen und ein Anheben der Compact-Disc (1) verhindern.

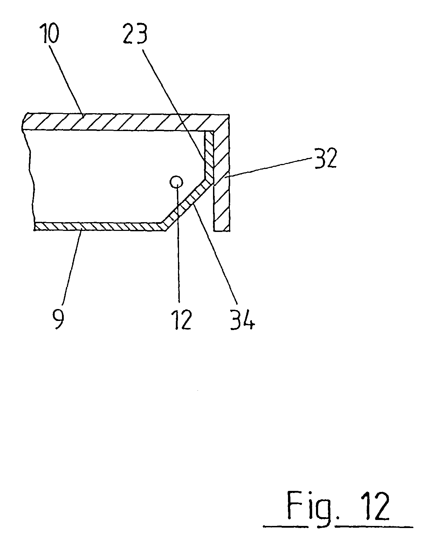

Der Querschnitt in Fig. 12 veranschaulicht, daß bei einer Anordnung des Schwenkgelenkes (12) gegenüberliegend zum Randsteg (11) im Bereich eines Unterschalenrandes (33) eine Anschrägung (34) vorgesehen ist, um eine Öffnungsbewegung der Oberschale (10) zu unterstützen. Die Anschrägung (34) kann als lineares Wandsegment oder gerundet ausgebildet sein. Bei der in Fig. 12 dargestellten Ausführungsform, bei der die Oberschale (10) einen Oberschalenrand (32) aufweist, ist eine Öffnung der Kassette (8) mit einem Öffnungswinkel der Oberschale (10) relativ zur Unterschale (9) von etwa 90° möglich. Soll ein vollständiges Aufschwenken der Kassette (8) ermöglicht werden, so ist es erforderlich, die Oberschale (10) ohne einen Oberschalenrand (32) im Bereich des Schwenkgelenkes (12) zu versehen.

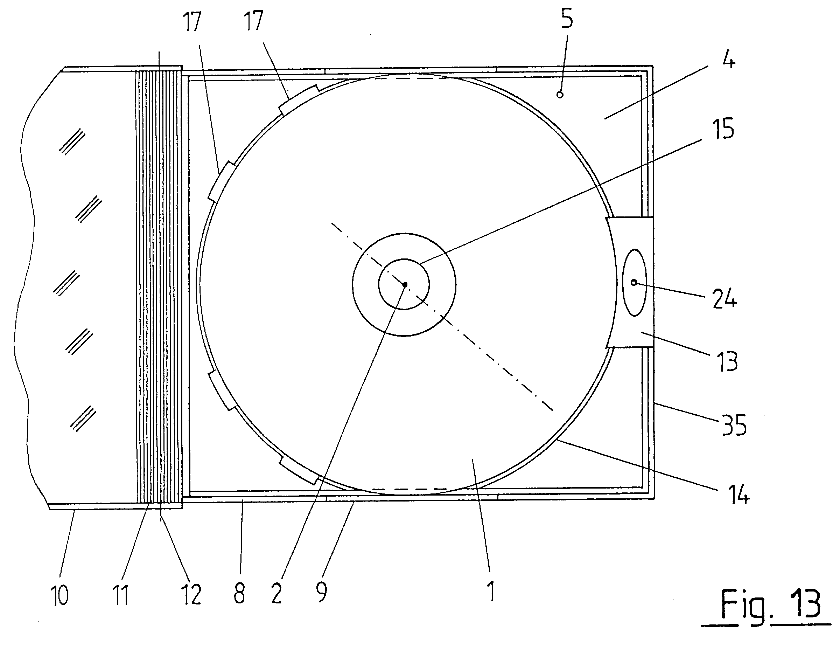

Gemäß der Ausführungsform in Fig. 13 ist die Entriegelungtaste (13) gegenüberliegend zum Schwenkgelenk (12) angeordnet. Zur Ermöglichung einer Verwendung von standardmäßig dimensionierten rechteckförmigen Beipackelementen (23) weist die Entriegelungstaste (13) ausgehend von einem Rand (35) der Unterschale (9) in Richtung auf das Schwenkgelenk (12) eine relativ geringe Dimensionierung auf.

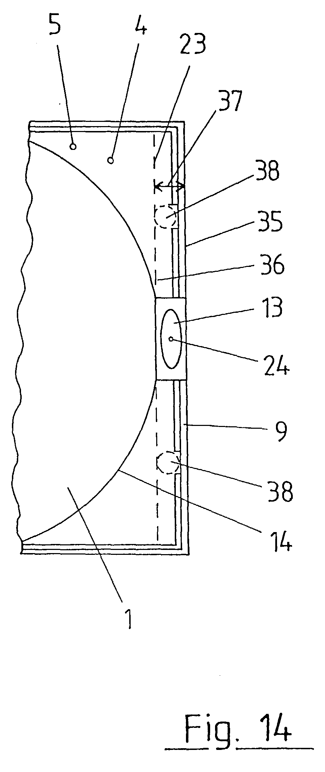

In Fig. 14 ist eine Ausführungsform veranschaulicht, die relativ ähnlich zur Ausführungsform in Fig. 13 ist. Zur weiteren Veranschaulichung der Geometrie ist hier zusätzlich in gestrichelten Linien das Beipackelement (23) mit Elementrand (36) eingezeichnet. Die Entriegelungstaste (13) ist derart dimensioniert, daß sie sich ausgehend vom Rand (35) bis zum Elementrand (36) erstreckt. Gegebenenfalls kann die Entriegelungstaste (13) auch geringfügig schmaler dimensioniert werden.

Ein Abstand (37) zwischen dem Elementrand (36) und dem Rand (35) wird durch Rastelemente (38) vorgegeben, die an der Oberschale (10) angeformt sind und zu einer klemmenden Verbindung zwischen der Oberschale (10) und der Unterschale (9) beziehungsweise zwischen der Oberschale (10) und dem in die Unterschale (9) eingefügten Einsatzteil (4) verwendet werden können. Es sind aber auch Ausführungsformen bekannt, bei dem die Rastelemente (38) lediglich zur Positionierung des Beipackelementes (23) verwendet werden. Alternativ zur dargestellten rundlichen Ausbildung der Rastelemente (38) können diese zur Positionierung des Beipackelementes (23) auch stegartig ausgebildet sein und beispielsweise quer zum Rand (35) oder mit einem Abstand und parallel zum Rand (35) verlaufen.

Gemäß einer anderen Ausführungsform ist es ebenfalls möglich, daß die Entriegelungstaste (13) lediglich zu einer Arretierung der Compact-Disc (1) vorgesehen ist und daß bei einer Betätigung der Entriegelungstaste (13) keine Beaufschlagung der Oberschale (10) erfolgt. Eine Verriegelung der Oberschale (10) relativ zur Unterschale (9) kann bei dieser Ausführungsform beispielsweise durch knopfartige Verdickungen erfolgen, die in einem Randbereich der Oberschale (10) oder der Unterschale (9) angeordnet sind und in korrespondierend angeordnete Mulden des jeweils anderen Bauelementes eingreifen können.

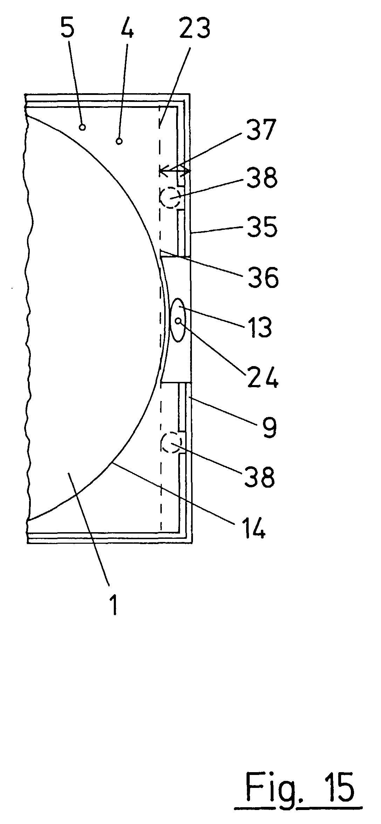

In Fig. 15 ist eine Ausführungsform dargestellt, bei der die Entriegelungstaste (13) keine eigentliche Entriegelungsfunktion vornimmt, sondern lediglich als ein Halteelement ausgebildet ist, das durch eine Aussparung der Oberschale (10) hindurchragt. Insbesondere ist daran gedacht, bei dieser Ausführungsform die Entriegelungstaste (13) fest mit dem plattenartigen Einsatzteil (4) zu verbinden oder diese Bauteile als einheitliches Teil spritzgußtechnisch herzustellen. Bei dieser Ausführungsform dient das Halteelement zu einem Ergreifen der Kassette vor einem Öffnen. Eine Öffnungsbewegung kann in einfacher Weise durchgeführt werden, ohne daß eine Umsetzung der Bedienhände erforderlich ist.

Vorteilhaft ist es bei dieser Ausführungsform insbesondere, das Haleelement derart zu dimensionierung, das es sich nicht mit dem von der Kassette aufnehmbaren Beipackelement (23) in dessen Aufbewahrungsposition überschneidet. Auch hierdurch wird die Verwendung von standardmäßigen Beipackelementen (23) unterstützt. Gemäß der Ausführungsform in Fig. 15 ist vorgesehen, das Halteelement im Bereich seiner der Compact-Disc (1) zugewandten Ausdehnung mit einer gerundeten Kontur zu versehen, um eine möglichst große Bedienfläche des Halteelementes bereitzustellen, ohne eine Entnahme der Compact-Disc (1) zu behindern. Die Halterung der Compact-Disc (1) kann in konventioneller Weise, beispielsweise über im Bereich einer Zentralausnehmung angeordnete Rastelemente, erfolgen. Eine derartige Fixierung der Compact-Disc (1) kann ebenfalls vorgesehen werden, wenn die Entriegelungstaste (13) gemäß einer weiteren Ausführungsform nur die Oberschale (10) relativ zur Unterschale (9) arretiert und bei der keine Beaufschlagung der Compact-Disc (1) durch die Entriegelungstaste (13) realisiert ist.

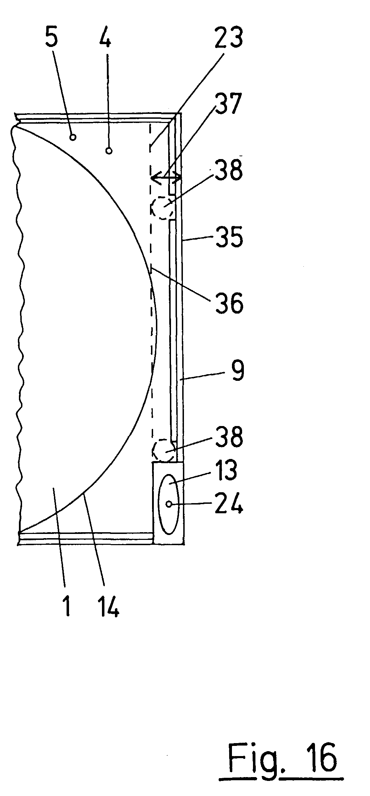

Eine weitere Variante zur Ausführungsform in Fig. 15 ist in Fig. 16 dargestellt. Auch hier übt das Halteelement lediglich die Funktion einer Handhabungsunterstützung aus, ohne selbst mit anderen Bauteilen in arretierendem Kontakt zu stehen. Fig. 16 veranschaulicht in Zusammenschau mit Fig. 15, daß im Hinblick auf eine Breitenerstreckung der Kassette eine nahezu beliebige Anordnung des Halteelementes erfolgen kann.

Gemäß Fig. 15 kann eine mittige Anordnung vorgesehen sein, in Fig. 16 ist eine Anordnung im Bereich einer Ecke veranschaulicht. Grundsätzlich sind ebenfalls Zwischenpositionierungen denkbar. Ebenfalls können statt eines einzelnen Halteelementes beispielsweise beanstandet zueinander zwei Halteelemente vorgesehen sein.

## Patentansprüche

1. Kassette zur Aufbewahrung von Compact-Discs, die eine Unterschale und eine verschwenkbar mit der Unterschale verbundene Oberschale aufweist und bei der mindestens eine Entriegelungstaste in einer Grundpositionierung die Oberschale relativ zur Unterschale fixiert und in einer Entriegelungsstellung eine Verschwenkung der Oberschale relativ zur Unterschale freigibt und bei der nach einem Aufschwenken der Oberschale relativ zur Unterschale die Compact-Disc ohne wesentliche klemmende Beaufschlagung freigegeben ist, dadurch gekennzeichnet, daß die Compact-Disc (1) in einer aufgeschwenkten Positionierung der Oberschale (10) relativ zur Unterschale (9) im Bereich einer Mittelaussparung (2) der Compact-Disc (1) relativ zur Unterschale (9) im wesentlichen hinterschneidungsfrei angeordnet ist.

2. Kassette nach Anspruch 1, dadurch gekennzeichnet, daß die Oberschale (10) eine Aufnahme zur Halterung eines im wesentlichen rechteckförmigen Beipackelementes (23) aufweist.

3. Kassette nach Anspruch 1 oder 2, dadurch gekennzeichnet, daß die Compact-Disc innerhalb der Unterschale (10) durch Halterungsvorsprünge (28,29,30) der Oberschale (10) fixierbar ist.

4. Kassette nach einem der Ansprüche 1 bis 3, dadurch gekennzeichnet, daß mindestens zwei der Halterungsvorsprünge (28,29,30) mit unterschiedlichen Abständen zu einem Schwenkgelenk (12) angeordnet sind, das die Oberschale (10) mit der Unterschale (9) verbindet.

5. Kassette nach einem der Ansprüche 1 bis 4, dadurch gekennzeichnet, daß die Entriegelungstaste (13) in einem seitlichen Bereich der Kassette (8) angeordnet ist.

6. Kassette nach einem der Ansprüche 1 bis 5, dadurch gekennzeichnet, daß die Entriegelungstaste (13) in einer Verriegelungstellung sowohl die Oberschale (10) relativ zur Unterschale (9) als auch die Compact-Disc (1) innerhalb der Kassette (8) fixiert.

7. Kassette nach einem der Ansprüche 1 bis 6, dadurch gekennzeichnet, daß innerhalb der Kassette (1) entlang eines Außenrandes (14) der Compact-Disc (1) mindestens ein Halteelement (17) angeordnet ist.

8. Kassette nach einem der Ansprüche 1 bis 7, dadurch gekennzeichnet, daß in mindestens einem Eckbereich der Kassette (8) mindestens zwei Halteelemente (17) angeordnet sind.

9. Kassette nach Anspruch 7 oder 8, dadurch gekennzeichnet, daß das Halteelement (17) einen die Compact-Disc (1) bereichsweise überkragenden Begrenzungssteg (19) aufweist.

10. Kassette nach einem der Ansprüche 7 bis 9, dadurch gekennzeichnet, daß der Begrenzungssteg (19) als Rastnase ausgebildet ist, die eine Einführanschrägung (21) aufweist.

11. Kassette nach einem der Ansprüche 1 bis 10, dadurch gekennzeichnet, daß die Entriegelungstaste (13) im Bereich eines Randsteges (11) der Kassette (8) angeordnet ist.

12. Kassette nach einem der Ansprüche 1 bis 11, dadurch gekennzeichnet, daß die Entriegelungstaste (13) dem Schwenkgelenk (12) gegenüberliegend angeordnet ist.

13. Kassette nach einem der Ansprüche 1 bis 12, dadurch gekennzeichnet, daß die Kassette (8) ein zylinderartig ausgebildetes Zentralelement (3) aufweist, das in eine Mittelaussparung (2) der Compact-Disc einführbar ist.

14. Kassette nach einem Anspruch 13, dadurch gekennzeichnet, daß das Zentralelement (3) eine Justieranschrägung zur Positionierung der Compact-Disc (1) innerhalb der Kassette (8) aufweist.

15. Kassette nach Anspruch 13 oder 14, dadurch gekennzeichnet, daß das Zentralelement (3) aus Stegen (6) ausgebildet ist, die sich relativ zu einer Bezugsfläche (5) erheben und von Abständen (7) getrennt sind.

16. Kassette nach einem der Ansprüche 1 bis 15, dadurch gekennzeichnet, daß die Entriegelungstaste (13) ausgehend von einem Rand (35) der Unterschale (9) eine Breite aufweist, die etwa einem Abstand (37) zwischen dem Rand (35) und einem Elementrand (36) eines Beipackelementes (23) entspricht.

17. Kassette nach einem Anspruch 16, dadurch gekennzeichnet, daß der Abstand (37) durch die Dimensionierung von an der Oberschale (10) angeformten Rastelementen (38) vorgegeben ist.

18. Kassette zur Aufbewahrung von Compact-Discs, die eine Unterschale und eine verschwenkbar mit der Unterschale verbundene Oberschale aufweist und bei der mindestens eine Halterungseinrichtung in einer Grundpositionierung von der Unterschale gehaltert ist und durch eine Aussparung der Oberschale hindurchragt sowie in einer Öffnungsstellung nach einer Verschwenkung der Oberschale relativ zur Unterschale von der Oberschale freigegeben ist, dadurch gekennzeichnet, daß die Halterungseinrichtung ausgehend von einem der Schwenkeinrichtung abgewandten Rand der Unterschale (9) in Richtung auf die Schwenkeinrichtung eine Breite aufweist, die maximal gleich einem Abstand eines von der Oberschale (10) gehalterten Beipackelementes (38) zu dem von dem der Schwenkeinrichtung abgewandten Rand der Unterschale (9) ausgebildet ist.

19. Kassette nach Anspruch 18, dadurch gekennzeichnet, daß die Halterungseinrichtung gemeinsam mit einem von der Unterschale (9) gehalterten plattenartigen Einsatzteil (4) ein gemeinsames Bauteil ausbildet.

20. Kassette nach Anspruch 18 oder 19, dadurch gekennzeichnet, daß die Oberschale (10) über eine Randprofilierung relativ zur Unterschale (9) fixierbar ist.

21. Kassette nach einem der Ansprüche 18 bis 20, dadurch gekennzeichnet, daß das Halteelement in einem mittleren Bereich der Längserstreckung des Randes angeordnet ist.

22. Kassette nach einem der Ansprüche 18 bis 20, dadurch gekennzeichnet, daß das Halteelement versetzt zu einem mittleren Bereich der Längsserstreckung des Randes angeordnet ist.

23. Kassette nach einem der Ansprüche 18 bis 20, dadurch gekennzeichnet, daß das Halteelement in einem Eckbereich der Unterschale (9) angeordnet ist.

24. Kassette zur Aufbewahrung von Compact-Discs, die eine Unterschale und eine verschwenkbar mit der Unterschale verbundene Oberschale aufweist und bei der mindestens eine Entriegelungstaste in einer Grundpositionierung die Compact-Disc relativ zur Unterschale fixiert sowie bei der in einer Entriegelungsstellung sowohl eine Verschwenkung der Oberschale relativ zur Unterschale als auch die Compact-Disc relativ zur Unterschale mindestens im Bereich der Entriegelungstaste freigegeben ist, dadurch gekennzeichnet, daß die Compact-Disc (1) in einer aufgeschwenkten Positionierung der Oberschale (10) relativ zur Unterschale (9) im Bereich einer Mittelaussparung (2) der Compact-Disc (1) relativ zur Unterschale (9) im wesentlichen hinterschneidungsfrei angeordnet ist und daß die Entriegelungstaste (13) ausschließlich eine Arretierung der Compact-Disc (1) relativ zur Unterschale (9) ohne arretierende Beaufschlagung der Oberschale (10) vornimmt.
